(19)

Europäisches Patentamt
European Patent Office
Office européen des brevets

(11) **EP 3 268 425 B1**

(12) **EUROPEAN PATENT SPECIFICATION**

(45) Date of publication and mention
of the grant of the patent:
**26.08.2020 Bulletin 2020/35**

(21) Application number: **16761173.0**

(22) Date of filing: **08.03.2016**

(51) Int Cl.:
***C08K 7/06*** (2006.01)     ***C08L 101/00*** (2006.01)

(86) International application number:
**PCT/IB2016/051294**

(87) International publication number:
**WO 2016/142848 (15.09.2016 Gazette 2016/37)**

(54) **A POLYMER NANOCOMPOSITE, PROCESS AND APPLICATIONS THEREOF**

POLYMERNANOVERBUNDSTOFF, VERFAHREN UND ANWENDUNGEN DAVON

NANOCOMPOSITE POLYMÈRE, PROCÉDÉ ET APPLICATIONS CORRESPONDANTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.03.2015  IN 638DE2015**

(43) Date of publication of application:
**17.01.2018 Bulletin 2018/03**

(73) Proprietors:
• **Secretary, Department of Electronics and
Information Technology (Deity)
New Delhi (IN)**
• **Mahatma Gandhi University
Kottayam, Kerala 686560 (IN)**

(72) Inventors:
• **POOTHANARI, Mohammed Arif
Malappuram 673639
Kerala (IN)**
• **THOMAS, Sabu
Kottayam 686560
Kerala (IN)**

• **KALARIKKAL, Nandakumar
Kottayam 686560
Kerala (IN)**

(74) Representative: **Grünecker Patent- und
Rechtsanwälte
PartG mbB
Leopoldstraße 4
80802 München (DE)**

(56) References cited:
**EP-A1- 2 151 830      JP-A- 2009 074 072
JP-A- 2013 181 047      KR-A- 20090 095 766
US-A1- 2008 207 824**

• **BHAGAT ET AL.: 'Development of electrical
conductivity in PP/HDPE/MWCNT
nanocomposite by melt mixing at very low
loading of MWCNT' POLYMER COMPOSITES vol.
34, no. 5, May 2013, pages 787 - 798, XP055308718**
• **L.A. DOBRZANSKI ET AL.: 'Microstructure and
mechanical properties of
Polypropylene/Polycarbonate blends' JOURNAL
OF ACHIEVEMENTS IN MATERIALS AND
MANUFACTURING ENGINEERING vol. 27, no. 1,
March 2008, pages 19 - 22, XP055308729**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present disclosure relates to the field of Polymer Science. More specifically, the present disclosure relates to polymer blend nanocomposite comprising polycarbonate (PC), polypropylene (PP) and multi-walled carbon nanotube (MWCNT). The present disclosure further relates to a process of preparing polymer blend nanocomposite comprising PC, PP and MWCNT and applications of the said nanocomposite.

### BACKGROUND AND PRIOR ART OF THE DISCLOSURE

Polypropylene (PP) and polycarbonate (PC) are thermoplastics having good mechanical properties and processability. Low heat resistance and poor low temperature impact properties of PP restrict its applications in high performance fields. In order to overcome this drawback, blending of PP with thermoplastics having higher heat resistance and high impact properties is being practiced.

Polycarbonate (PC) is an expensive engineering thermoplastic having high heat resistance and high impact properties and so the blending of PP with PC can provide new blend systems which could be used in many applications in an economical way. However, such blends of PP and PC are immiscible and incompatible due to the polarity differences (i.e., PP is nonpolar whereas PC is polar) and viscosity mismatch (PP has low viscosity whereas PC has high viscosity). As a result, the morphologies of these blends are highly unstable and thus, unsuitable for practical applications.

The technology of polymer blending is employed for obtaining new structural materials, wherein low cost polymers are mixed with expensive high performance polymers. Most of the polymer blends are immiscible and incompatible due to the unfavourable interactions and very low contribution of entropy. Therefore, several methodologies have been tried to compatibilise incompatible polymer pairs by modifying the properties of immiscible blends. These include physical and reactive compatibilisation routes. Compatibilisation is a process of modification of the interfacial properties in an immiscible polymer blend, resulting in reduction of the interfacial tension coefficient, formation and stabilization of the desired morphology. Compatibilisation using block copolymers, graft copolymers, random copolymers and homopolymers has been reported extensively in the blend literature. Graft copolymer has segments having specific interactions with the main polymeric components and reduces the interfacial tension and alters the molecular structure.

Several methodologies exist in the prior art to compatibilise incompatible polymer pairs such as PC (polycarbonate)/PP (polypropylene). For instance, the compatibilisation of polycarbonate blend by using catalyst including alkali and alkaline earth oxides, hydroxides, amides, etc. has been done. Some researchers have used polypropylene-graft-maleic anhydride (PP-g-MA) as the compatibiliser for PC/PP blend. However, the prior art methods for preparing PC (polycarbonate)/PP (polypropylene) blends are associated with several drawbacks such as very low reinforcement effect and higher requirement of mass fraction of compatibiliser. Very often the compatibilisers leave the interface at high temperature and form their own phases. Therefore the blends become highly unstable. Hence, there exists a need to develop stable, homogeneous and highly efficient polycarbonate and polypropylene blends possessing good mechanical properties. The present disclosure tries to overcome the drawbacks of the prior art by providing highly stable and efficient PC/PP blends and unique method for preparing the same.

JP 2009 074072 A discloses a conductive composite material comprising a thermoplastic resin and carbon nanotubes (CNTs). The thermoplastic resin may be polycarbonate (PC), polyethylene (PE) or polypropylene (PP). The Examples of JP 2009 074072 A disclose blends of CNTs/PC, CNTs/PE or CNTs/PP.

US 2008/0207824 A1 discloses a method for dispersing carbon nanotubes (CNTs) in a host polymer matrix, said method comprising the steps of coating CNTs with a polymer, followed by hot process mixing of the coated CNTs with a host polymer matrix. The Examples of US 2008/0207824 A1 disclose dispersing polyethylene (PE)-coated CNTs in a host polymer matrix being an ethylene vinyl acetate (EVA) copolymer, polycarbonate (PC), polyamide or polyether ether ketone (PEEK).

EP 2 151 830 A1 discloses a composition comprising 75 wt% polypropylene (PP), 3.75 wt% carbon nanotubes (CNTs), and 21.25 wt% polycarbonate (PC).

JP 2013 181047 A discloses a resin composition comprising polypropylene carbonate (PPC).

KR 2009 0095766 A discloses a polycarbonate resin composition comprising carbon nanotubes (CNTs), and an olefinic polymer such as polypropylene (PP). The olefinic polymer is contained in an amount of 0.1 to 10 wt%.

### STATEMENT OF THE DISCLOSURE

The present disclosure relates to a polymer blend nanocomposite comprising polycarbonate (PC), polypropylene (PP) and multi-walled carbon nanotube (MWCNT), wherein the PC is present at a concentration ranging from 45 (w/w%) to 60 (w/w%), PP is present at a concentration ranging from 35 (w/w%) to 50 (w/w%) and MWCNT is present at a concentration ranging from 0.5 (w/w%) to 5% (w/w %).

The present disclosure further relates to a process of preparing said polymer blend nanocomposite, said process comprising acts of:

a) mixing polycarbonate (PC) and polypropylene (PP) to obtain a PC/PP blend system; and
b) adding multi- walled carbon nanotube (MWCNT) to the PP/PC blend system followed by mixing to obtain the polymer blend nanocomposite.

The present disclosure is also directed to the use of said polymer blend nanocomposite in flame retardant applications, high impact applications and conducting applications.

Preferred embodiments of the present disclosure are set forth in the dependent claims.

## BRIEF DESCRIPTION OF ACCOMPANYING DRAWINGS

In order that the disclosure may be readily understood and put into practical effect, reference will now be made to exemplary embodiments as illustrated with reference to the accompanying figures. The figures together with a detailed description below, are incorporated in and form part of the specification, and serve to further illustrate the embodiments and explain various principles and advantages, in accordance with the present disclosure where:

**Figure 1a** shows the steps of interfacial stitching and selective localization of MWCNTs on co-continuous blend system of immiscible PC/PP pairs giving rise to double percolating network (PC/PP/MWCNT nanocomposite). **Figure 1b** depicts the PC/PP/MWCNT nanocomposite showing the selective localization of MWCNT network connecting the interface of immiscible PC/PP pairs.

**Figures 2a and 2b** show HR-TEM images of MWCNT (5 weight %) filled PC/PP blend. The MWCNTs are localized at the interface of the co-continuous PC/PP blends. Many MWCNTs stitch the co-continuous interphase of PC and PP phases.

**Figure 3a** shows Scanning Electron Microscope image of PC/PP blend without MWCNTs, wherein PC: PP is at a concentration of 60:40 by weight %. **Figure 3b** shows Scanning Electron Microscope image of PC/PP blend without MWCNTs, wherein PC: PP is at a concentration of 50:50 by weight %.

**Figure 4** shows increase in tensile strength of the nanocomposite polymer blend of PC, PP (60/40) and MWCNTs by 130%, upon the addition of MWCNTs up to 5% by weight, showcasing stabilization of morphology and improvement in mechanical properties.

**Figure 5** shows increase in Young's modulus of the nanocomposite polymer blend of PC, PP (60/40) and MWCNTs by 90%, upon the addition of MWCNTs up to 5% by weight, showcasing stabilization of morphology and improvement in mechanical properties.

**Figure 6** shows increase in elongation break of the nanocomposite polymer blend of PC, PP (60/40) and MWCNTs, by addition of MWCNTs up to 2.5% by weight and decrease in elongation break at 5% by weight.

**Figure 7** shows the degree of continuity of the extracted phase by performing solvent extraction studies on nanocomposite polymer blend of PC and PP, indicating co-continuous morphology of the polymer blend. Solvent extraction studies establish that a blend of solely PC and PP (without MWCNTs) wherein the PC/PP are at concentration of 50/50 and 60/40 show co-continuous morphology.

## DETAILED DESCRIPTION OF THE DISCLOSURE

The present disclosure relates to a polymer blend nanocomposite comprising polycarbonate (PC), polypropylene (PP) and multi-walled carbon nanotube (MWCNT), wherein the PC is present at a concentration ranging from 45 (w/w%) to 60 (w/w%), PP is present at a concentration ranging from 35 (w/w%) to 50 (w/w%) and MWCNT is present at a concentration ranging from 0.5 (w/w%) to 5% (w/w %).

In an embodiment of the present disclosure, the MWCNT is selectively localized at the interface of PC and PP.

In another embodiment of the present disclosure, the polymer blend nanocomposite is in the form of a double percolating network structure, and wherein the MWCNTs stitch co-continuous interphases of PC and PP to form said double percolating network structure.

In still another embodiment of the present disclosure, the PC is present at a concentration ranging from 47.5 (w/w%) to 59.75 (w/w%), PP is present at a concentration ranging from 37.5 (w/w%) to 49.75 (w/w%) and MWCNT is present at a concentration ranging from 0.5 (w/w%) to 5% (w/w%).

In still another embodiment of the present disclosure, said composite has Young's modulus of 849.13 to 1629.6 MPa, tensile strength of 14.58 to 33.85 MPa, elongation at break of 1.6 to 3.5 (%), loss modulus of 36118.3 to 71143.2 Pa, storage modulus of 28264.5 to 62525.5 Pa and dielectric constant of 3.2 to 10.8.

The present disclosure relates to a process of preparing the polymer blend nanocomposite, said process comprising acts of:

a) mixing polycarbonate (PC) and polypropylene (PP) to obtain a PC/PP blend system; and

b) adding multi- walled carbon nanotube (MWCNT) to the PP/PC blend system followed by mixing to obtain the polymer blend nanocomposite.

In an embodiment of the present disclosure, the mixing of step (a) is carried out in a mixer at a temperature ranging from 225 °C to 240 °C, preferably 230°C.

In another embodiment of the present disclosure, the mixer is selected from a group comprising Brabender mixer (Mixer Type 50 EHT), Haake mixer and twin screw extruder.

In yet another embodiment of the present disclosure, the PC is introduced into the mixer at a temperature ranging from 225°C to 240°C, followed by addition of PP to the PC.

In still another embodiment of the present disclosure, the PC is introduced at a concentration ranging from 45 to 60 weight % of the polymer blend, preferably at a concentration ranging from 47.5 (w/w%) to 59.75 (w/w%) and PP is added to PC at a concentration ranging from 35 to 50 weight % of the polymer blend, preferably at a concentration ranging from 37.5 (w/w%) to 49.75 (w/w%).

In still another embodiment of the present disclosure, the concentration ratio of the PC/PP in the PC/PP blend system obtained in step (a) is preferably 50:50 or 60:40.

In still another embodiment of the present disclosure, the mixing in step (a) is carried out at a rotational speed ranging from 50 rpm to 60 rpm, preferably at 60 rpm, and for a duration of 1 to 2 minutes, preferably for 2 minutes to obtain the PC/PP blend system.

In still another embodiment of the present disclosure, the MWCNT is added to the PC/PP blend system at a concentration ranging from 0.5 (w/w%) to 5 (w/w%), preferably at 5 (w/w%).

In still another embodiment of the present disclosure, the step b) is a melt-mixing process.

In still another embodiment of the present disclosure, the mixing in step (b) is carried out at a rotational speed ranging from 50 rpm to 60 rpm, preferably at 60 rpm, and for duration of 6 to 8 minutes, preferably for 8 minutes.

In still another embodiment of the present disclosure, the obtained polymer blend nanocomposite is compression moulded at a temperature ranging from 220 °C to 230 °C, preferably 230 °C, at a pressure of 80 to 120 kg/cm$^2$, preferably 100 kg/cm$^2$ for a duration ranging from 1 to 2 minutes, preferably for 1 minute.

In still another embodiment of the present disclosure, the compression moulding is followed by cooling of the polymer blend nanocomposite to a temperature of 25 °C to 30 °C and at a pressure ranging from 80 to 120 kg/cm$^2$, preferably 100 kg/cm$^2$.

In still another embodiment of the present disclosure, the polymer blend nanocomposite is used in flame retardant applications, high impact applications and conducting applications.

Throughout the present disclosure, the terms interfacial stitching, co-continuous interface, selective localization, neat, unmodified MWCNTs, compression moulding, Young's modulus, tensile strength, elongation at break, melt-mixing process, solvent extraction, storage modulus and loss modulus and dielectric constant refer to the following:

a) Interfacial stitching:

An interface is a region of space occupied by two molecular species, clearly a gradation of composition exists, between the two phases on either side. In polymer blend, the extremely narrow region (1-2 nm thickness) where one polymer is in contact with another polymer is called a polymer blend interface. When CNTs are selectively localized at the interface of the polymer blend, the interface becomes thicker, broader and more diffused. The selectively localised CNTs criss-cross the interface region and thus stitch the interface between the PC and PP phases so that they interact more favourably leading to reduced interface tension and more thicker, broader interface.

b) Co-continuous interface:

If a polymer blend system has co-continuous morphology, both phases are continuous in the matrix. These morphologies are characterized by the mutual interpenetration of the two coexisting phases. The co-continuous morphology shows a unique combination of the characteristics of both polymer components. The type of morphology which is formed during processing depends on the nature of the polymers (interfacial tension, viscosities and the ratio of these viscosities), their volume fractions and the processing conditions.

c) Selective localization:

Selective localisation means Nano fillers, i.e. MWCNTs localise selectively at the interface of the system or at any one the polymer component.

d) Neat, unmodified MWCNTs:

Unmodified MWCNTs refer to MWCNTs wherein there is no functional group attached on the CNTs like - COOH, -$NH_2$ etc.

e) Compression moulding:

The compression moulding process is a method of moulding in which a preheated polymer is placed into an open, heated mould cavity. The mould is closed with a top plug and pressure is applied to force the material to flow into all areas of the mould. Throughout the process, heat and pressure are maintained until the polymer flows and forms uniform product.

f) Young's modulus:

Young's Modulus quantifies the elasticity of the polymer. It is defined as the ratio of stress to strain in the linear elastic region.

g) Tensile strength:

The tensile strength is the stress needed to break a sample. It is the maximum stress that a material can withstand while being stretched or pulled before failing or breaking. In other words, tensile strength of a material is the maximum amount of tensile stress that it can take before failure.

h) Elongation at break:

The elongation-to-break is the strain on a sample when it breaks. This usually is expressed as a percent. It is the ratio between changed length and initial length after breakage of the test specimen. It expresses the capability of a material to resist changes of shape without crack formation.

i) Melt-mixing process:

In melt mixing process, the two polymers are mixed under high shear in molten state. In this method, direct mixing of the polymer with filler at high temperature is done without solvent.

j) Solvent extraction:

In solvent extraction experiments, one of the phases is selectively removed from the sample. The degree of continuity represents the fraction of the phase that is continuous. The degree of continuity of the extracted phase is calculated based on its initial mass and the change in mass during extraction is calculated using the equation:

$$\varphi_i = \frac{m_{i0} - m_{if}}{m_{i0}}$$

where $\varphi_i$ is the degree of continuity of component i; $m_{i0}$ is the mass of component i originally present in the sample, and $m_{if}$ is the mass of component i present in the sample after extraction. Samples in which each phase has a degree of continuity of 1.0 are completely co-continuous.

k) Storage modulus and Loss modulus:

The storage modulus and loss modulus in viscoelastic solids measures the stored energy, representing the elastic portion, and the energy dissipated as heat, representing the viscous portion. The storage and loss modulus tell us about the stress response for a visco-elastic material in oscillatory shear. A viscous fluid will have stress proportional to the shear strain-rate (Newtonian) and an elastic solid will have stress proportional to the shear strain. A visco-elastic response will be a mixture of the two. The storage modulus is the elastic solid like behavior (G') and the loss modulus is the viscous response (G").

a) <u>Dielectric constant</u>

Dielectric constant is defined as a quantity measuring the ability of a substance to store electrical energy in an electric field.

The present disclosure relates to polymer blend-filler nanocomposites. In particular, the present disclosure relates to polymer nanocomposites comprising polycarbonate (PC), polypropylene (PP) and carbon nanotube (CNT), wherein the PC is present at a concentration ranging from 45 (w/w%) to 60 (w/w%), PP is present at a concentration ranging from 35 (w/w%) to 50 (w/w%) and MWCNT is present at a concentration ranging from 0.5 (w/w%) to 5% (w/w %).

In an embodiment of the present disclosure, the CNT is multi-walled carbon nanotubes (MWCNTs) and said MWCNT's are selectively localized at the interface of PC/PP blends through melt mixing process.

In another embodiment of the present disclosure, the polymer nanocomposite comprises polycarbonate at a concentration ranging from 47.5 to 59.75 (w/w%), polypropylene at a concentration ranging from 37.5 to 49.75 (w/w%) and MWCNTs at a concentration ranging from 0.5 to 5 (w/w%). In exemplary embodiments of the present disclosure, the details of the blend compositions are given in Table 1.

**Table 1: The components and concentrations of blend composition of the present disclosure**

| Polycarbonate (wt %) | Polypropylene (wt %) | MWCNT (wt %) |
|---|---|---|
| 49.75 | 49.75 | 0.5 |
| 49.5 | 49.5 | 1 |
| 48.75 | 48.75 | 2.5 |
| 47.5 | 47.5 | 5 |
| 59.75 | 39.75 | 0.5 |
| 59.5 | 39.5 | 1 |
| 58.75 | 38.75 | 2.5 |
| 57.5 | 37.5 | 5 |

In yet another embodiment of the present disclosure, the MWCNTs are employed to stitch the co- continuous interface of PP/PC blends by the selective localization at the interface of the PC/PP blends to give rise to a double percolating network structure, a stable and homogenous morphology with excellent mechanical properties and high performance.

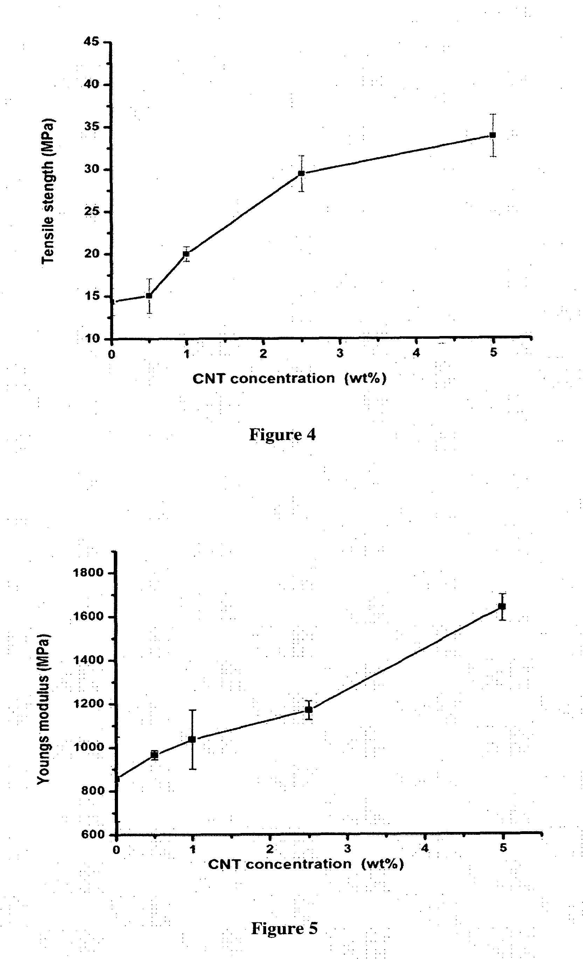

In still another embodiment of the present disclosure, neat (unmodified) MWCNTs are used to stitch the co-continuous interface of PP/PC blends by the selective localization of the CNT at PC/PP blend interface. The selective localization and the consequent interfacial stitching gives rise to a PC/PP/MWCNT nanocomposite having stable morphology with excellent mechanical properties like Young's modulus, tensile strength and elongation at break (for example, figures 4, 5 and 6). The relevance of properties is explained in detail below.

<u>Young's modulus:</u>

In many applications mechanical properties like Young's modulus, tensile strength and elongation at break are very important. The Young's modulus of a material describes how well it resists deformation. A material with a higher modulus is stiffer and has better resistance to deformation. The Young's modulus is defined as the force per unit area required to produce a deformation or in other words the ratio of stress to strain in the linear region.

<u>Tensile strength:</u>

The Tensile strength of a material is the maximum amount of tensile stress that it can be subjected to before failure. Tensile strength is important for a material that is going to be stretched or under tension. This is an important concept in engineering, especially in the fields of material science, mechanical engineering and structural engineering.

Elongation at break

Elongation is the percentage increase in original length (strain) of a material as a result of tensile force (stress) being applied to the specimen. Elongation is inversely proportional to hardness, tensile strength, and modulus. That is, the greater a material's hardness, tensile strength, and modulus, the lesser it will elongate under stress. It takes more force to stretch a hard material having high tensile strength and high modulus than to stretch a soft material with low tensile strength and low modulus.

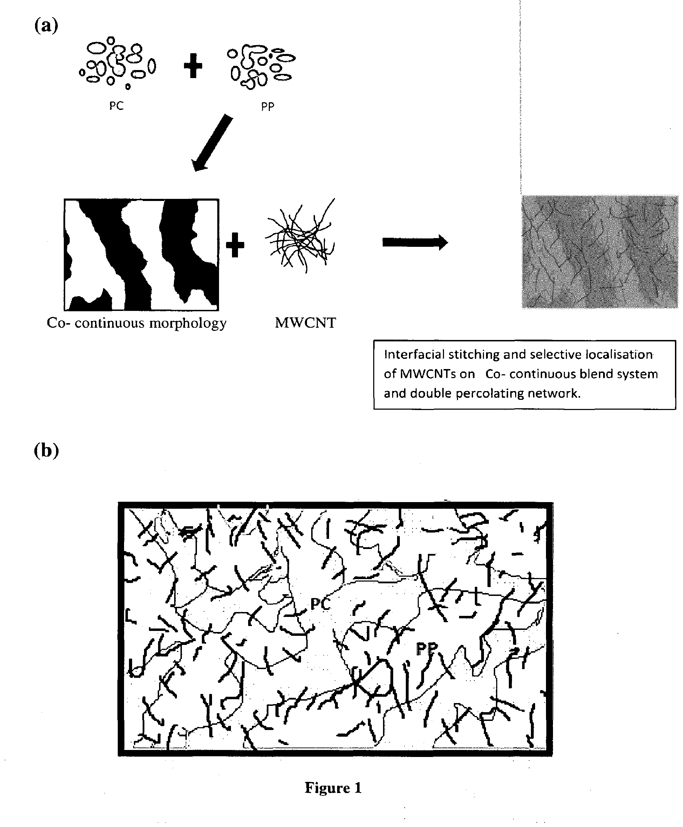

Many MWCNT filler units stitch the co-continuous interphase of PC and PP phases. The selective localization of the MWCNT network connects the interphase of the immiscible PC/PP pairs to form the stable nanocomposite of the present disclosure. This is schematically shown in Figure 1.

The present disclosure further relates to a method of blending or compatibilising polypropylene (PP) and polycarbonate (PC) with the help of multi-walled carbon nanotubes (MWCNTs) to arrive at the nanocomposite described herein, wherein the MWCNTs (preferably, neat/unmodified MWCNTs) stitch the co-continuous interface of PC/PP blends by selectively localizing at the interface of the PC/PP blends. This interfacial stitching gives rise to a double percolating network structure in the polymer blend resulting in a stable and homogenous morphology (as shown in Fig. 1b), with excellent mechanical properties and high performance.

In an embodiment of the present disclosure, the blending of polypropylene (PP) and polycarbonate (PC) with the help of multi-walled carbon nanotubes (MWCNTs) is carried out by method selected from a group comprising melt mixing process, solvent casting and cryomilling.

In an exemplary embodiment of the present disclosure, the melt mixing process is employed for the blending of PC and PP with the help of MWCNTs, owing to the eco-friendly nature of the melt mixing process.

In a preferred embodiment of the present disclosure, the method of blending or compatibilising polypropylene (PP) and polycarbonate (PC) with the help of neat/unmodified multi-walled carbon nanotubes (MWCNTs) employs introducing the neat multi-walled carbon nanotubes into PP/PC blends by melt mixing process at a temperature ranging from 225 °C to 240 °C, preferably 230°C, and for a time-period of about 10 minutes.

In another embodiment of the present disclosure, the melt mixing process of blending or compatibilising polypropylene (PP) and polycarbonate (PC) with the help of MWCNTs comprises acts of:

a) introducing polycarbonate into a mixer at a temperature ranging from 225 °C to 240 °C preferably 230°C;
b) adding polypropylene to the polycarbonate, followed by mixing to obtain a PC/PP blend system;
c) introducing MWCNTs to the PP/PC blend system followed by mixing to obtain nano composite polymer blend of PP, PC and MWCNTs; and
d) compression moulding of said nanocomposite polymer blend.

In another embodiment of the above described melt-mixing process, the PC is introduced at a concentration ranging from 45 to 60 (w/w%) of the PC/PP polymer blend. In a preferred embodiment of the melt-mixing process as described above, the PC is introduced at a concentration ranging from 47.5 to 59.75 (w/w%).

In still another embodiment of the melt-mixing process as described above, the PC is introduced into a mixer selected from a group comprising Brabender mixer (Mixer Type 50 EHT), Haake mixer and twin extruder at a temperature of 230°C.

In still another embodiment of the above described melt-mixing process, the PP is added at a concentration ranging from 35 to 50 (w/w%) of the PC/PP polymer blend. In a preferred embodiment of the melt-mixing process as described above, the PP is added at a concentration ranging from 37.5 to 49.75 (w/w%).

In a most preferred embodiment of the above described melt-mixing process, the obtained PC/PP blend is at a concentration of 50/50 or 60/40, and show co-continuous morphology.

In still another embodiment of the melt-mixing process as described above, the mixing of polypropylene with polycarbonate is carried out at rotational speed ranging from 50 rpm to 60 rpm, preferably at 60 rpm, and for a duration of 1 to 2 minutes, preferably for 2 minutes.

In still another embodiment of the melt-mixing process as described above, the MWCNTs are added to the PC/PP blend system at a concentration ranging from 0.5% to 5% by weight, preferably at 5% by weight of the final polymer nanocomposite.

In still another embodiment of the melt-mixing process as described above, the MWCNTs are mixed with the PC/PP blend system at rotational speed ranging from 50 rpm to 60 rpm, preferably at 60 rpm, and for duration of 6 to 8 minutes, preferably for 8 minutes.

In still another embodiment of the melt-mixing process as described above, the obtained nanocomposite polymer blend is compression moulded at a temperature ranging from 220 °C to 230 °C, preferably 230°C, at pressure ranging from 80 kg/cm$^2$ to 120 kg/cm$^2$, preferably 100 kg/cm$^2$, for a duration ranging from 1 to 2 minutes, preferably for 1 minute, followed by cooling to room temperature.

The aforementioned mixing parameters affect the morphology of the blend system. If the mixing time increases, the MWCNT would break and the properties of CNTs would be lost. The time, temperature and rotor speed involved in the method of the present disclosure is optimised for preparing the nano composite polymer blend.

The most preferred concentration ranges of PC ranges from 47.5 (w/w%) to 59.75 (w/w%), PP is present at a concentration ranging from 37.5 (w/w%) to 49.75 (w/w%) and MWCNT is present at a concentration ranging from 0.5 (w/w%) to 5% (w/w%).

respectively. At 5 weight% of MWCNTs, a network is formed in the polymer blend system. At a lower nanotube concentration, a proper percolating network structure cannot be established in the polymer matrix. A continuous nanotube network is achieved with an increase in the concentration of MWCNTs upto 5 weight%. Increase in the content of MWCNTs beyond 5 weight percent would result in aggregation of the MWCNTs and loss of its properties. Thus, the concentrations/concentration ranges of PC, PP and MWCNTs as described in the present disclosure are of utmost importance to arrive at the desired nanocomposites.

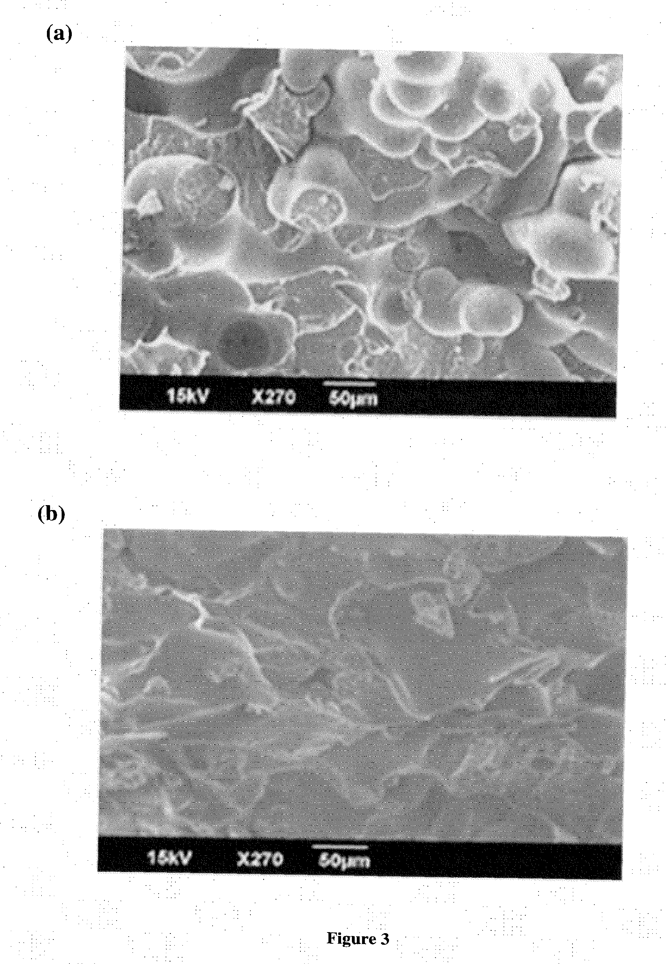

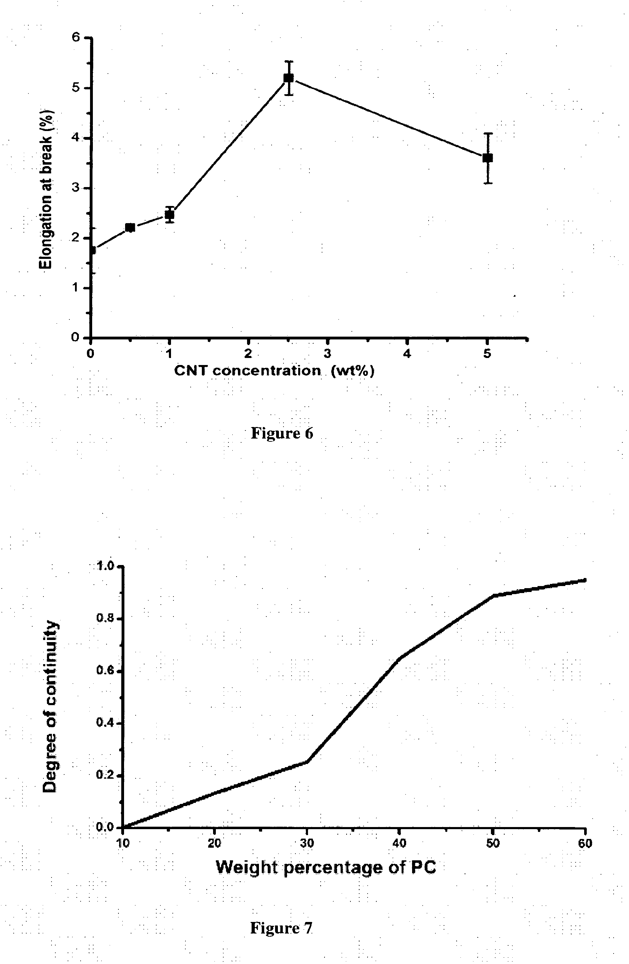

An embodiment of the present disclosure further relates to the preparation of achieving co-continuous morphology in PC/PP blend system and incorporation of MWCNTs into the PC/PP polymer blend system. MWCNTs are selectively localised at PC/PP blend interface and they stitch the co-continuous interfaces. From SEM and solvent extraction studies (with reference to figure 3a, 3b and figure 7), it is evident that blends of PC/PP (without MWCNT) at a concentration of 50/50 and 60/40 show co-continuous morphology.

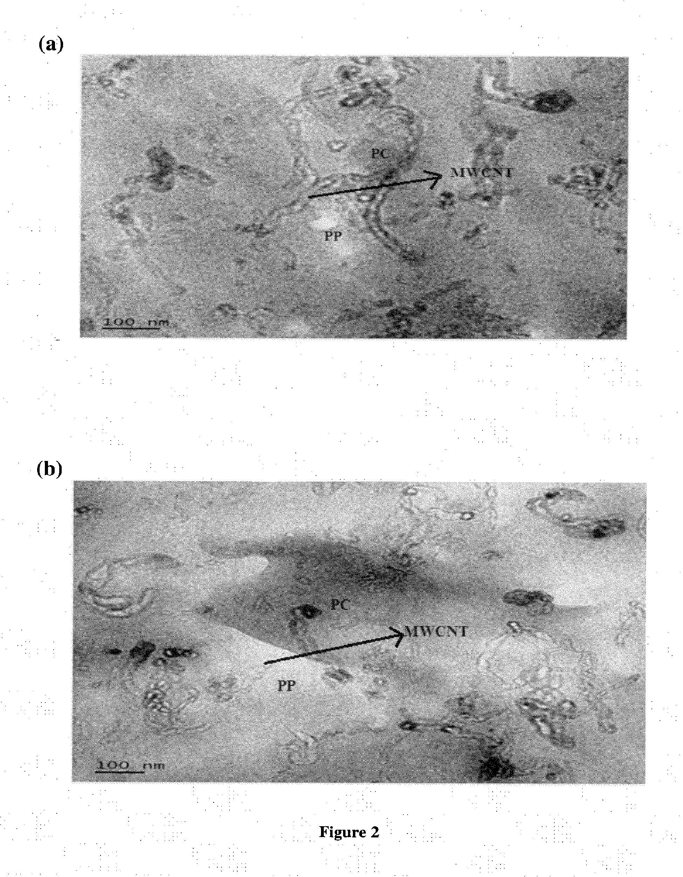

In another embodiment of the present disclosure, the interfacial localization of the MWCNTs and the consequent stitching of the interface are studied by means of High Resolution TEM. The TEM data and mechanical measurement provide ample evidence for the interfacial localisation and stitching of the PC/PP interfaces by MWCNTs (with reference to figure 2a, 2b and figures 4-6). A double percolating network of PC/PP/MWCNTs nanocomposite is produced which that means that the MWCNTs go into the PC and PP phases and form a percolating network.

In the present disclosure, the following steps are systematically followed for the development of the PC/PP/MWCNT nanocomposite polymer:

a. Design, development and careful determination of co-continuous morphology (PC/PP blend);
b. In corporation of MWCNTs into the co-continuous blend morphology;
c. Generating double percolating network with interfacial stitching and localisation of the CNTs at interfacial region.

Carbon nanotubes (CNTs) act as a compatibiliser only if a co-continuous morphology of PC/PP blend is generated. If not, it would give inferior results/properties. In other words, if the PC/PP blend cannot form a co-continuous blend structure, negative results would be obtained. Further, it is to be noted that the present nanocomposite polymer blend comprising PC, PP and MWCNTs cannot be simply obtained by a mere admixture of the individual components because by mere mixing of PC/PP/MWCNT, one cannot get the desired double percolating structure i.e. the product (PC/PP/MWCNT nanocomposite) of the instant disclosure.

On the other hand, the polymer blend of the present disclosure having PC/PP at a concentration of 50/50 and 60/40 shows co- continuous morphology. When the MWCNTs are incorporated into the system, the MWCNTs are localised at PC/PP blend interfaces, stitch the co- continuous interfaces and form a double percolating network structure.

## ADVANTAGES OF THE POLYMER NANOCOMPOSITE OF THE INSTANT DISCLOSURE

1. The nanoparticles- MWCNTs are able to change the interaction coefficient between the two polymers and thus improve the compatibility between the PC/PP polymer pairs. The compatibilization of phase separated PC/PP polymer blends involves lowering the interfacial tension between the phases and suppression of coalescence of the particles during melt processing.
2. Stable and homogeneous morphology of PC/PP with MWCNT.
3. Improved mechanical properties of PC/PP blend with MWCNT.
4. Due to the co-continuous morphology of PC/PP blend system, the CNTs can form a double percolating network structure. Due to this network formation, the thermal, electrical, rheological and mechanical properties of the PC/PP blend system are enhanced.
5. Neat and unmodified MWCNTs are employed in the polymer blend. Unmodified MWCNTs means that there is no functional group attached on the CNTs like - COOH, - $NH_2$ etc. Preparation of functionalised CNTs is a complex procedure, time consuming and requires treatment with solvents. Also, cost of the functionalised CNTs is higher compared to unmodified CNT. Hence, the method of the present disclosure is also cost-effective due to the employment of MWCNTs.
6. The melt mixing process followed to obtain the present polymer nanocomposite blends of PC, PP and MWCNTs is an environment-friendly process.

7. The present polymer nanocomposite blend is used for EMI shielding and other conducting applications. The MWCNTs act as a barrier to passage of gases, solvents and vapour. Therefore, the nanocomposite polymer blend is an excellent material for barrier applications.

8. Other advantages of the present PC/PP blends include in applications such as flame retardant applications, high impact applications, chemical resistance applications, packaging applications etc.

The disclosure is further illustrated by the following examples. The following examples are provided for illustrative purposes only and are not intended to limit the scope of the present disclosure.

Materials employed to arrive at the Examples of the present disclosure:

Brabender mixer (Mixer Type 50 EHT), polycarbonate, polypropylene, MWCNTs, dichloromethane (for solvent extraction studies)

## EXAMPLE 1

### Method of preparing nanocomposite polymer blends comprising PC, PP and MWCNTs

EXAMPLE 1a:

In a Brabender mixer, the temperature is set to about 230°C. After attaining the desired temperature, polycarbonate (PC) is added to the mixer at a concentration of about 49.75 (w/w%)Once PC melts, polypropylene (PP) is added at a concentration of about 49.75 (w/w%). Then, the blend of PC and PP is mixed for about 2 minutes at a rotational speed of about 60 rpm. Thereafter, MWCNTs are incorporated in the blend system at a concentration of about 0.5 (w/w%). The blend is mixed again at about 60 rpm for about 8 minutes. The resulting blend is then compression moulded at a temperature of about 230°C and at a pressure of about 100 kg/cm$^2$ for about 1 minute. Thereafter, the blend is cooled to room temperature at the same pressure to obtain the nanocomposite polymer blend comprising PC, PP and MWCNTs.

EXAMPLE 1b:

In a Brabender mixer, the temperature is set to about 230°C. After attaining the desired temperature, polycarbonate (PC) is added to the mixer at a concentration of about 57.5 (w/w%). Once PC melts, polypropylene (PP) is added at a concentration of about 37.5 (w/w%). Then, the blend of PC and PP is mixed for about 2 minutes at a rotational speed of about 60 rpm. Thereafter, MWCNTs are incorporated in the blend system at a concentration of about 5 (w/w%). The blend is mixed again at about 60 rpm for about 8 minutes. The resulting blend is then compression moulded at a temperature of about 230°C and at a pressure of about 100 kg/cm$^2$ for about 1 minute. Thereafter, the blend is cooled to room temperature at the same pressure to obtain the nanocomposite polymer blend comprising PC, PP and MWCNTs.

EXAMPLE 1c:

In a Brabender mixer, the temperature is set to about 230°C. After attaining the desired temperature, polycarbonate (PC) is added to the mixer at a concentration of about 59.5 (w/w%). Once PC melts, polypropylene (PP) is added at a concentration of about 39.5 (w/w%). Then, the blend of PC and PP is mixed for about 2 minutes at a rotational speed of about 60 rpm. Thereafter, MWCNTs are incorporated in the blend system at a concentration of about 1 (w/w%). The blend is mixed again at about 60 rpm for about 8 minutes. The resulting blend is then compression moulded at a temperature of about 230°C and at a pressure of about 100 kg/cm$^2$ for about 1 minute. Thereafter, the blend is cooled to room temperature at the same pressure to obtain the nanocomposite polymer blend comprising PC, PP and MWCNTs.

EXAMPLE 1d:

In a Brabender mixer, the temperature is set to about 230°C. After attaining the desired temperature, polycarbonate (PC) is added to the mixer at a concentration of about 58.75 (w/w%). Once PC melts, polypropylene (PP) is added at a concentration of about 38.75 (w/w%). Then, the blend of PC and PP is mixed for about 2 minutes at a rotational speed of about 60 rpm. Thereafter, MWCNTs are incorporated in the blend system at a concentration of about 2.5 (w/w%). The blend is mixed again at about 60 rpm for about 8 minutes. The resulting blend is then compression moulded at a temperature of about 230°C and at a pressure of about 100 kg/cm$^2$ for about 1 minute. Thereafter, the blend is cooled to room temperature at the same pressure to obtain the nanocomposite polymer blend comprising PC, PP and MWCNTs.

## EXAMPLE 2:

**Characterization Studies of PC/PP blends comprising PC and PP & Nanocomposite polymer blends comprising PC, PP and MWCNTs:**

Solvent extraction study is a very good and accurate method for the determination of co-continuous region of binary polymer blends. Solvent extraction experiments require one of the phases to be selectively removed from the sample. The degree of continuity represents the fraction of the phase that is continuous.

For solvent extraction experiment, each sample disk (a piece of PC/PP blend) is immersed in 250 ml of dichloromethane for one day. PC phase is dissolved in dichloromethane. The samples are then removed from solution, and are dried in oven at temperature 80 °C for 12 hrs and the mass of the samples after extraction was determined. The degree of continuity is calculated using equation:

$$\varphi_i = \frac{m_{i0} - m_{if}}{m_{i0}}$$

As the amount of PC in the blends increases, its degree of continuity also increases. At low percentage of PC the degree of continuity is low, in agreement with the expected morphology of dispersed droplets for these compositions. For higher PC content the degree of continuity is higher, signifying a more connected morphology. At 50% and 60% of PC the degree of co-continuity approaches unity, i.e., the blend of PC/PP at a concentration of 50/50 and 60/40 show co- continuous morphology (with reference to figure 7).

From SEM and solvent extraction studies (with reference to figure 3a, 3b and figure 7), it is evident that blends of PC/PP at a concentration of 50/50 and 60/40 show co-continuous morphology.

The interfacial localization of the MWCNTs and the consequent stitching of the interface are studied by means of High Resolution TEM. The TEM data and mechanical measurement provide ample evidence for the interfacial localisation and stitching of the PC/PP interfaces by MWCNTs (with reference to figure 2a, 2b and figures 4-6).

## EXAMPLE 3:

**Properties of Nanocomposite polymer blend comprising PC, PP and MWCNTs**

The selective localization and the consequent interfacial stitching gives rise to a PC/PP/MWCNT nanocomposite having stable morphology with excellent mechanical properties like Young's modulus, tensile strength and elongation at break (for example, figures 4, 5 and 6). The results of determination of the above properties are that tensile strength is increased by 130% (figure 4), Young's modulus is increased by 90% (figure 5) upon the addition of 5% weight MWCNTs. Elongation at break is increased by the addition of MWCNTs up to 2.5 weight % (figure 6).

The above mechanical properties are very important for designing high performance materials. These composites are light weight due to the intrinsic low density of polypropylene. They also exhibit anti-corrosion properties and excellent processability and good thermal end electrical properties.

The MWCNTs form a double network structure with interfacial localisation and stitching. Owing to the double percolating network structure of the blend of the present disclosure, with interfacial localisation and stitching, thermal, rheological, electrical and mechanical properties of blend system are enhanced.

## EXAMPLE 4

**Comparison of properties of Nanocomposite polymer blend comprising PC, PP and MWCNTs vis-à-vis pure blend**

In the nanocomposite polymer blend of the present disclosure, MWCNTs are incorporated into the co-continuous morphology of the blend system. The MWCNTs form a double network structure with interfacial localisation and stitching. Due to this network with interfacial localisation and stitching, thermal, rheological, electrical and mechanical properties of blend system are enhanced. From the rheological and dielectric data, the properties of nanocomposite are found to be improved when compared to a pure blend, as shown in the below Tables 2 and 3.

**Table 2: Comparison of the mechanical properties of PC/PP pure blend and blend comprising PC/PP and MWCNT**

| Polycarbonate (wt. %) | Polypropylene (wt %) | MWCNT (wt %) | Young's modulus (MPa) | Tensile strength (MPa) | Elongation at break (%) |
|---|---|---|---|---|---|
| 60 | 40 | 0 | 849.13 | 14.58 | 1.6 |
| 57.5 | 37.5 | 5 | 1629.6 | 33.85 | 3.5 |

**Table 3: Comparison of the properties of PC/PP pure blend and blend comprising PC/PP and MWCNT**

| | Loss modulus @100 rad/s (P) | Storage modulus @ 100 rad/s (P) | Dielectric constant. @ 1 MHz |
|---|---|---|---|
| PC/PP (60/40) Pure blend | 36118.3 | 28264.5 | 3.2 |
| PC/PP (57.5/37.5) Blend + 5% CNT (present invention) | 71143.2 | 62525.5 | 10.8 |

From the above table, it is evident that the present blend comprising PC/PP and MWCNTs show superior properties in terms of electrical, mechanical, thermal and rheological properties as compared to that of pure blend of PC and PP.

**EXAMPLE 5**

**Comparison of properties of Nanocomposite polymer blend comprising PC, PP and MWCNTs vis-à-vis PP/PC blend compatibilized using polypropylene-graft-maleic anhydride (PP-g-MA) as the compatibiliser**

Yin Zhihui et al (Polymer, Vol. 39 No. 3, pp. 547-551, 1998) studied the effect of the compatibilizer PP-g-MA on morphology and mechanical properties of PP/PC blends. This study reported that the Young's modulus, tensile strength and elongation at break are improved. For example, the tensile strength and Young's modulus of PP/PC/PP-g-GMA (50/30/20) are stated to be 90% and 39.84 % higher than the values for PP/PC (70/30) blend respectively. Here the mass fraction of compatibiliser used is very high, i.e. about 20wt% PP-g-MA is used as a compatibiliser.

On the other hand, in the nanocomposite polymer blend of the present disclosure comprising PC, PP and MWCNTs [wherein MWCNTS are at a concentration of only 0.5 to 5 w/w%] possesses the potential to increase tensile by 130% and Young's modulus by 90%

Thus, the present disclosure provides highly stable, homogeneous, compatible and multiwalled carbon nanotube (MWCNT) reinforced PC/PC nanocomposite blends for high performance applications. Said MWCNT reinforced PC/PP product is prepared by selective localization and interfacial stitching by MWCNT. This approach provides high level of compatibility between PC & PP polymers and leads to a stable morphology. The present PC/PP product further shows excellent mechanical and electrical properties and are useful in various industrial applications.

**Claims**

1. A polymer blend nanocomposite comprising polycarbonate (PC), polypropylene (PP) and multi-walled carbon nanotube (MWCNT), wherein the PC is present at a concentration ranging from 45 (w/w%) to 60 (w/w%), PP is present at a concentration ranging from 35 (w/w%) to 50 (w/w%) and MWCNT is present at a concentration ranging from 0.5 (w/w%) to 5% (w/w %).

2. The polymer blend nanocomposite as claimed in claim 1, wherein the MWCNT is selectively localized at the interface of PC and PP.

3. The polymer blend nanocomposite as claimed in claim 1, wherein the polymer blend nanocomposite is in the form of a double percolating network structure, and wherein the MWCNTs stitch co-continuous interphases of PC and PP to form said double percolating network structure.

4. The polymer blend nanocomposite as claimed in claim 1, wherein the PC is present at a concentration ranging from 47.5 (w/w%) to 59.75 (w/w%), PP is present at a concentration ranging from 37.5 (w/w%) to 49.75 (w/w%) and MWCNT is present at a concentration ranging from 0.5 (w/w%) to 5% (w/w%).

5. The polymer blend nanocomposite as claimed in claim 1, wherein said composite has Young's modulus of 849.13 to 1629.6 MPa, tensile strength of 14.58 to 33.85 MPa, elongation at break of 1.6 to 3.5 (%), loss modulus of 36118.3 to 71143.2 Pa, storage modulus of 28264.5 to 62525.5 Pa and dielectric constant of 3.2 to 10.8.

6. A process of preparing the polymer blend nanocomposite as claimed in claim 1, said process comprising acts of:

   a) mixing polycarbonate (PC) and polypropylene (PP) to obtain a PC/PP blend system; and
   b) adding multi- walled carbon nanotube (MWCNT) to the PP/PC blend system followed by mixing to obtain the polymer blend nanocomposite as claimed in claim 1.

7. The process as claimed in claim 6, wherein the mixing of step (a) is carried out in a mixer at a temperature ranging from 220°C to 240°C, preferably 230°C.

8. The process as claimed in claim 6 or 7, wherein the mixer is selected from a group comprising Brabender mixer (Mixer Type 50 EHT), Haake mixer and twin screw extruder; and wherein the PC is introduced into the mixer at a temperature ranging from 225°C to 240°C, followed by addition of PP to the PC.

9. The process as claimed in claim 6 or 8, wherein PC is introduced at a concentration ranging from 45 to 60 weight % of the polymer blend, preferably at a concentration ranging from 47.5 (w/w%) to 59.75 (w/w%) and PP is added to PC at a concentration ranging from 35 to 50 weight % of the polymer blend, preferably at a concentration ranging from 37.5 (w/w%) to 49.75 (w/w%).

10. The process as claimed in claim 6, wherein the concentration ratio of the PC/PP in the PC/PP blend system obtained in step (a) is 50:50 or 60:40; and wherein the MWCNT is added to the PC/PP blend system at a concentration ranging from 0.5 (w/w%) to 5 (w/w%), preferably at about 5 (w/w%).

11. The process as claimed in claim 6, wherein the mixing in step (a) is carried out at a rotational speed ranging from 50 rpm to 60 rpm, preferably at 60 rpm, and for a duration of 1 to 2 minutes, preferably for 2 minutes to obtain the PC/PP blend system.

12. The process as claimed in claim 6, wherein the step b) is a melt-mixing process; wherein the mixing in step (b) is carried out at a rotational speed ranging from 50 rpm to 60 rpm, preferably at 60 rpm, and for duration of 6 to 8 minutes, preferably for about 8 minutes.

13. The process as claimed in claim 6, wherein the obtained polymer blend nanocomposite is compression moulded at a temperature ranging from 220°C to 230°C, preferably 230 °C, at a pressure of 80 to 120 kg/cm$^2$, preferably 100 kg/cm$^2$ for a duration ranging from 1 to 2 minutes, preferably for 1 minute; and wherein the compression moulding is followed by cooling of the polymer blend nanocomposite to a temperature of 25°C to 30 °C and at a pressure ranging from 80 to 120 kg/cm$^2$, preferably 100 kg/cm$^2$.

14. Use of the polymer blend nanocomposite of claim 1 in flame retardant applications, high impact applications and conducting applications.

**Patentansprüche**

1. Polymerblend-Nanokomposit, umfassend Polycarbonat (PC), Polypropylen (PP) und mehrwandiges Kohlenstoffnanoröhrchen (MWCNT), wobei das PC in einer Konzentration im Bereich von 45 (Gew.-%) bis 60 (Gew.-%) vorliegt, PP in einer Konzentration im Bereich von 35 (Gew.-%) bis 50 (Gew.-%) vorliegt und MWCNT in einer Konzentration im Bereich von 0,5 (Gew.-%) bis 5% (Gew.-%) vorliegt.

2. Polymerblend-Nanokomposit wie in Anspruch 1 beansprucht, wobei das MWCNT selektiv an der Grenzfläche von PC und PP lokalisiert ist.

3. Polymerblend-Nanokomposit wie in Anspruch 1 beansprucht, wobei das Polymerblend-Nanokomposit in Form einer doppelten Perkolationsnetzwerkstruktur vorliegt und wobei die MWCNTs co-kontinuierliche Interphasen von PC und PP heften, um die doppelte Perkolationsnetzwerkstruktur zu bilden.

4. Polymerblend-Nanokomposit wie in Anspruch 1 beansprucht, wobei das PC in einer Konzentration im Bereich von 47,5 (Gew.-%) bis 59,75 (Gew.-%) vorliegt, PP in einer Konzentration im Bereich von 37,5 (Gew.-%) bis 49,75 (Gew.-%) vorliegt und MWCNT in einer Konzentration im Bereich von 0,5 (Gew.-%) bis 5% (Gew.-%). vorliegt.

5. Polymerblend-Nanokomposit wie in Anspruch 1 beansprucht, wobei das Komposit einen Elastizitätsmodul von 849,13 bis 1629,6 MPa, eine Zugfestigkeit von 14,58 bis 33,85 MPa, eine Bruchdehnung von 1,6 bis 3,5 (%), einen Verlustmodul von 36118,3 bis 71143,2 Pa, einen Speichermodul von 28264,5 bis 62525,5 Pa und eine Dielektrizitätskonstante von 3,2 bis 10,8 aufweist.

6. Verfahren zur Herstellung des Polymerblend-Nanokomposits wie in Anspruch 1 beansprucht, wobei das Verfahren Schritte umfasst:

   a) Mischen von Polycarbonat (PC) und Polypropylen (PP), um ein PC/PP-Blendsystem zu erhalten; und
   b) Zusetzen von mehrwandigem Kohlenstoffnanoröhrchen (MWCNT) zu dem PP/PC-Blendsystem, gefolgt von Mischen, um das Polymerblend-Nanokomposit wie in Anspruch 1 beansprucht zu erhalten.

7. Verfahren wie in Anspruch 6 beansprucht, wobei das Mischen von Schritt (a) in einem Mischgerät bei einer Temperatur im Bereich von 220 °C bis 240 °C, vorzugsweise 230 °C ausgeführt wird.

8. Verfahren wie in Anspruch 6 oder 7 beansprucht, wobei das Mischgerät ausgewählt ist aus einer Gruppe, umfassend ein Brabender-Mischgerät (Mischgerät Typ 50 EHT), ein Haake-Mischgerät und einen Doppelschneckenextruder; und wobei das PC bei einer Temperatur im Bereich von 225 °C bis 240 °C in das Mischgerät eingeführt wird, gefolgt von der Zugabe von PP zum PC.

9. Verfahren wie in Anspruch 6 oder 8 beansprucht, wobei PC in einer Konzentration im Bereich von 45 bis 60 Gew.-% des Polymerblends eingeführt wird, vorzugsweise in einer Konzentration im Bereich von 47,5 (Gew.-%) bis 59,75 (Gew.-%), und PP zum PC in einer Konzentration im Bereich von 35 bis 50 Gew .-% des Polymerblends, vorzugsweise in einer Konzentration im Bereich von 37,5 (Gew.-%) bis 49,75 (Gew.-%), zugesetzt wird.

10. Verfahren wie in Anspruch 6 beansprucht, wobei das Konzentrationsverhältnis des PC/PP in dem in Schritt (a) erhaltenen PC/PP-Blendsystem 50:50 oder 60:40 beträgt; und wobei das MWCNT dem PC/PP-Blendsystem in einer Konzentration im Bereich von 0,5 (Gew.-%) bis 5 (Gew.-%), vorzugsweise bei etwa 5 (Gew.-%), zugesetzt wird.

11. Verfahren wie in Anspruch 6 beansprucht, wobei das Mischen in Schritt (a) bei einer Drehzahl im Bereich von 50 U/min bis 60 U/min, vorzugsweise bei 60 U/min, und für eine Dauer von 1 bis 2 Minuten, vorzugsweise für 2 Minuten, ausgeführt wird, um das PC/PP-Blendsystem zu erhalten.

12. Verfahren wie in Anspruch 6 beansprucht, wobei der Schritt b) ein Schmelzmischverfahren ist; wobei das Mischen in Schritt (b) bei einer Drehzahl im Bereich von 50 U/min bis 60 U/min, vorzugsweise bei 60 U/min, und für eine Dauer von 6 bis 8 Minuten, vorzugsweise etwa 8 Minuten, ausgeführt wird.

13. Verfahren wie in Anspruch 6 beansprucht, wobei das erhaltene Polymerblend-Nanokomposit bei einer Temperatur im Bereich von 220 °C bis 230 °C, vorzugsweise 230 °C, bei einem Druck von 80 bis 120 kg/cm$^2$, vorzugsweise 100 kg/cm$^2$, für eine Dauer im Bereich von 1 bis 2 Minuten, vorzugsweise für 1 Minute, formgepresst wird; und wobei auf das Formpressen das Abkühlen des Polymerblend-Nanokomposits auf eine Temperatur von 25 °C bis 30 °C und bei einem Druck im Bereich von 80 bis 120 kg/cm$^2$, vorzugsweise 100 kg/cm$^2$, folgt.

14. Verwendung des Polymerblend-Nanokomposits nach Anspruch 1 in Flammschutzanwendungen, Anwendungen mit hoher Schlagbeanspruchung und leitenden Anwendungen.

**Revendications**

1. Nanocomposite de mélange de polymères comprenant du polycarbonate (PC), du polypropylène (PP) et du nanotube de carbone multiparoi (MWCNT), le PC étant présent à une concentration allant de : 45 (% en poids) à 60 (% en poids), le PP étant présent à une concentration allant de : 35 (% en poids) à 50 (% en poids) et le MWCNT étant présent à une concentration allant de 0,5 (% en poids) à 5 (% en poids).

2. Nanocomposite de mélange de polymères ainsi que revendiqué dans la revendication 1, dans lequel le MWCNT est localisé sélectivement à l'interface du PC et du PP.

3. Nanocomposite de mélange de polymères ainsi que revendiqué dans la revendication 1, le nanocomposite de mélange de polymères étant sous la forme d'une structure en réseau à double percolation, et les MWNCT formant un maillage d'interphases co-continues de PC et de PP pour former ladite structure en réseau à double percolation.

4. Nanocomposite de mélange de polymères ainsi que revendiqué dans la revendication 1, dans laquelle le PC est présent à une concentration allant de 47,5 (% en poids) à 59,75 (% en poids), le PP est présent à une concentration allant de 37,5 (% en poids) à 49,75 (% en poids) et le MWCNT est présent à une concentration allant de 0,5 (% en poids) à 5 (% en poids).

5. Nanocomposite de mélange de polymères ainsi que revendiqué dans la revendication 1, ledit composite ayant un module de Young de 849,13 à 1629,6 MPa, une résistance à la traction de 14,58 à 33,85 MPa, un allongement à la rupture de 1,6 à 3,5 (%), un module de perte de 36 118,3 à 71 143,2 Pa, un module de stockage de 28 264,5 à 62 525,5 Pa et une constante diélectrique de 3,2 à 10,8.

6. Procédé de préparation du nanocomposite de mélange de polymères ainsi que revendiqué dans la revendication 1, ledit procédé comprenant des actes consistant à :

   a) mélanger du polycarbonate (PC) et du polypropylène (PP) pour obtenir un système mélangé PC/PP ; et
   b) ajouter du nanotube de carbone multiparoi (MWCNT) au système mélangé PP/PC et ensuite mélanger pour obtenir le nanocomposite de mélange de polymères ainsi que revendiqué dans la revendication 1.

7. Procédé ainsi que revendiqué dans la revendication 6, dans lequel l'étape de mélange (a) est effectuée dans un mélangeur à une température allant de 220 °C à 240 °C, de préférence 230 °C.

8. Procédé ainsi que revendiqué dans la revendication 6 ou 7, dans lequel le mélangeur est choisi dans un groupe comprenant un mélangeur Bradbender (type de mélangeur 50 EHT), un mélangeur Haake et une extrudeuse à double vis ; et le PC est introduit dans le mélangeur à une température allant de 225 °C à 240 °C, suivi de l'addition de PP au PC.

9. Procédé ainsi que revendiqué dans la revendication 6 ou 8, dans lequel le PC est introduit à une concentration allant de 45 à 60 % en poids du mélange de polymères, de préférence à une concentration allant de 47,5 (% en poids) à 59,75 (% en poids) et du PP est ajouté au PC à une concentration allant de 35 à 50 % en poids du mélange de polymères, de préférence à une concentration allant de 37,5 (% en poids) à 49,75 (% en poids).

10. Procédé ainsi que revendiqué dans la revendication 6, dans lequel le rapport de concentration du PC/PP dans le système mélangé PC/PP obtenu à l'étape (a) est de 50:50 ou 60:40 ; et dans lequel le MWCNT est ajouté au système mélangé PC/PP à une concentration allant de 0,5 (% en poids) à 5 (% en poids), de préférence à environ 5 (% en poids).

11. Procédé ainsi que revendiqué dans la revendication 6, dans lequel le mélangeage à l'étape (a) est effectué à une vitesse de rotation allant de 50 tr/min à 60 tr/min, préférablement à 60 tr/min, et pendant une durée de 1 à 2 minutes, de préférence pendant 2 minutes pour obtenir le système mélangé PC/PP.

12. Procédé ainsi que revendiqué dans la revendication 6, dans lequel l'étape b) est une opération de fusion-mélange ; le mélangeage à l'étape (b) étant effectué à une vitesse de rotation allant de 50 tr/min à 60 tr/min, de préférence à 60 tr/min, et pendant une durée de 6 à 8 minutes, de préférence pendant environ 8 minutes.

13. Procédé ainsi que revendiqué dans la revendication 6, dans lequel le nanocomposite de mélange de polymères obtenu est moulé par compression à une température allant de 220 °C à 230 °C, de préférence 230 °C, à une pression de 80 à 120 kg/cm$^2$, de préférence 100 kg/cm$^2$ pendant une durée allant de 1 à 2 minutes, de préférence pendant 1 minute ;

et dans lequel le moulage par compression est suivi par un refroidissement du nanocomposite de mélange de polymères à une température de 25 °C à 30 °C et à une pression allant de 80 à 120 kg/cm$^2$, de préférence 100 kg/cm$^2$.

14. Utilisation du nanocomposite de mélange de polymères selon la revendication dans des applications d'ignifugeage, des applications à chocs importants et des applications de conduction.

**(a)**

PC          PP

Co- continuous morphology          MWCNT

Interfacial stitching and selective localisation
of MWCNTs on   Co- continuous blend system
and double percolating network.

**(b)**

**Figure 1**

**(a)**

**(b)**

**Figure 2**

(a)

(b)

Figure 3

**Figure 4**

**Figure 5**

**Figure 6**

**Figure 7**

**EP 3 268 425 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009074072 A
- US 20080207824 A1
- EP 2151830 A1
- JP 2013181047 A
- KR 20090095766 A

**Non-patent literature cited in the description**

- **YIN ZHIHUI et al.** *Polymer,* 1998, vol. 39 (3), 547-551